# EUROPÄISCHE PATENTSCHRIFT

(11) **EP 0 415 092 B1**
(45) Veröffentlichungstag und Bekanntmachung des Hinweises auf die Patenterteilung: **15.09.1993**
(21) Anmeldenummer: 90114464.2
(22) Anmeldetag: 27.07.1990
(51) Int. Cl.: F16F 13/00, F16F 9/49, B60K 5/12

(54) **Ringkernlager zur Abstützung von Antriebsaggregaten in Kraftfahrzeugen**
Toroidal mounting for suspending engines in vehicles
Support toroidal pour la suspension d'un moteur de véhicule

(30) Priorität: 01.09.1989 DE 3929099
(43) Veröffentlichungstag der Anmeldung: 06.03.1991
(73) Patentinhaber: METZELER GIMETALL AG, D-80992 München (DE)
(72) Erfinder: Behrens, Stefan, D-5410 Höhr-Grenzhausen (DE)
(74) Vertreter: Seibert, Hannelore

(56) Entgegenhaltungen:
- DE-A- 3 742 340
- DE-C- 684 075
- DE-C- 3 836 191
- FR-A- 2 613 799
- FR-A- 2 635 155

## Beschreibung

Die Erfindung bezieht sich auf ein Ringkernlager zur Abstützung von Antriebsaggregaten in Kraftfahrzeugen mit einer zwischen einem motorseitigen und einem karosserieseitigen Flansch eingespannten hohlzylindrischen Tragfeder aus elastomerem Material sowie mit einem Zug- und Druckanschlag, der einen am motorseitigen Flansch festgelegten und die Tragfeder und den karosserieseitigen Flansch frei durchsetzenden Bolzen aufweist, an dessen freiem Ende ein ringförmiger Anschlag aus elastischem Material angeordnet ist.

Derartige Motorlager weisen im allgemeinen eine flache Kraft-Verformungs-Kennlinie und eine progressive Kennung im Anschlagbereich auf. Um auch höherfrequente Vibrationen kleiner Amplitude des Motors zu isolieren wird im allgemeinen die Tragfeder aus einem hochelastischen Elastomer gefertigt.

Dabei ergeben sich jedoch folgende Probleme. Zum einen prallt bei stoßartigen Belastungen des Lagers dieses wegen der niedrigen Steifigkeit im Arbeitsbereich mit hoher Geschwindigkeit in den Anschlag und wird infolge fehlender Dämpfung wieder zurückgeworfen. Da hierbei dem schwingungsfähigen System nur wenig Energie entzogen wird, kommt es zu einem wiederholtem Eingreifen des Anschlages, was von den Fahrzeuginsassen als unangenehm empfunden wird. Darüber hinaus wird das Lager durch Betriebslasten wegen seiner niedrigen Steifigkeit im Arbeitsbereich aus dem Arbeitspunkt verschoben und es kommt zum Anliegen des Anschlags. Dadurch erhöht sich die Steifigkeit des Lagers, und die Isolation gegen Vibrationen wird verschlechtert.

Auch durch eine entsprechend gewählte Geometrie des Anschlages und einer Abstimmung der Materialeigenschaften bezüglich Steifigkeit und Dämpfung können die dem Lager inhärenten Nachteile nicht befriedigend beseitigt werden. So führt eine Erhöhung der Materialdämpfung des Anschlags zu einer Verbesserung des Schwingungsabbaus, die jedoch bei lastbedingtem Anliegen des Anschlages an den Kontaktflächen mit einer Anhebung der Geräuschübertragung erkauft wird.

Der vorliegenden Erfindung liegt daher die Aufgabe zugrunde, ein derartiges Lager zu schaffen, das neben einer guten Isolation höherfrequenter Vibrationen auch eine gute Dämpfung bei Eingreifen des Anschlages aufweist, wobei diese Dämpfung in weiten Grenzen einstellbar ist.

Zur Lösung dieser Aufgabe ist erfindungesgemäß vorgesehen, daß auf Ober- und Unterseite einer am freien Bolzenkopf festgelegten Tragplatte mindestens je zwei angenähert nierenförmige, elastisch verformbare Hohlkammern aus elastomerem Material als Anschlagpolster einander gegenüberliegend festgelegt sind, die jeweils mit einer Flüssigkeit gefüllt sind und über einen die Tragplatte durchdringenden Überströmkanal miteinander in Verbindung stehen.

Zweckmäßigerweise dient dabei als Zuganschlagfläche die Unterseite des karosserieseitigen Flansches und als Druckanschlag der Boden eines auf die Unterseite des karosserieseitigen Flansches aufgesetzen topfförmigen Gehäuses.

Damit kommt bei großen axialen Bewegungen des Lagers eine der Hohlkammern mit den Anschlagflächen in Berührung, so daß sie verformt und die Flüssigkeit durch die Überströmöffnung in die gegenüberliegende unbelastete Kammer verdrängt wird. Die dadurch bedingten Strömungsverluste entziehen der Aggregatbewegung Energie und bedämpfen sie damit. Durch eine entsprechende Auslegung von Geometrie und Volumennachgiebigkeit der Kammern, der Geometrie des Überströmkanals und der Viskosität der Flüssigkeit kann die Anschlagcharakteristik in weiten Bereichen entsprechend eingestellt werden.

Zweckmäßig ist es dabei, wenn die Hohlkammern als nierenförmige Halbschalen ausgebildet sind, die mit ihrer offenen Seite auf der Tragplatte befestigt sind.

Ein besonders günstiger Verlauf der dynamischen Steifigkeit ergibt sich dabei, wenn die nierenförmigen Hohlkammern angenähert halbkreisförmigen Querschnitt mit abnehmender Wandstärke zum Scheitelpunkt hin aufweisen. Dadurch nimmt die Volumennachgiebigkeit der Hohlkammer mit zunehmender Verformung durch die Kontaktfläche ab, so daß damit die dynamische Steifigkeit ansteigt.

Zweckmäßigerweise sind die auf einer Kreislinie hintereinanderliegenden Hohlkammern einer Seite auf einer gesonderten ringscheibenförmigen Platte aufvulkanisiert, welche Platten durch die Tragplatte hindurch und gegenseitig verspannt sind.

Eine optimale Gestaltung ergibt sich, wenn jeweils drei Hohlkammern auf einer Tragplattenseite angeordnet sind.

Anhand einer schematischen Zeichnung sind Aufbau und Funktionsweise von Ausführungsbeispielen nach der Erfindung näher erläutert. Dabei zeigen
- Fig. 1: einen Längsschnitt durch ein Ringkernlager mit integriertem hydraulischem Anschlag,
- Fig. 2: eine Aufsicht auf den oberen Anschlag mit drei nierenförmigen Hohlkammern
- Fig. 3: einen Längsschnitt durch die Hohlkammern entsprechend der Schnittlinie III-III nach Fig. 2
- Fig. 4: ein Diagramm über den Verlauf der dynamischen Steifigkeit bei Verwendung von Flüssigkeiten unterschiedlicher Viskosität und
- Fig. 5: ein Diagramm über den Verlauf des Verlustfaktors ebenfalls bei Flüssigkeiten unterschiedlicher Viskosität

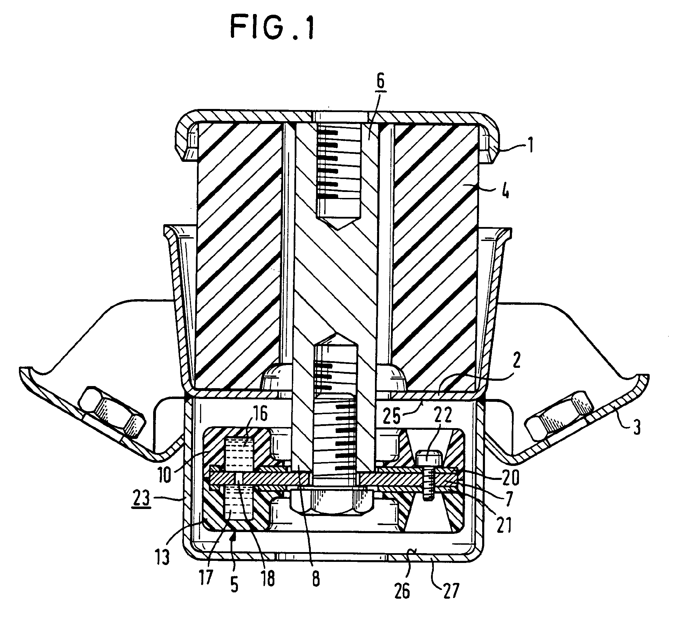

Wie man aus Fig. 1 ersieht, ist zwischen einem motorseitigen Flansch 1 und einem karossierieseitigen Flansch 2 mit dem entsprechenden Anschraubteil 3 eine hohlzylindrische Tragfeder 4 aus einem hochelastischen Elastomer eingespannt. Mit dieser Tragfeder 4 werden auf dem motorseitigen Flansch 1 festgelegte, nicht näher dargestellte Antriebsaggregate abgestützt. Eine derartige Tragfeder 4 aus hochelastischem Material kann zwar höherfrequente Vibrationen kleiner Amplituden des Antriebsaggregats gut isolieren, eine Schwingungsdämpfung - insbesondere wenn ein solches Lager in den Anschlag geht - ist aber nur sehr unzureichend gegeben.

Um diesen Nachteil zu beheben, ist ein hydraulisch gedämpfter Zug- und Druckanschlag 5 vorgesehen, der wie folgt aufgebaut ist:

Am freien Ende 8 eines Bolzens 6, der am motorseitigen Flansch 1 angeschweit ist und die hohlzylindrische Tragfeder 4 sowie den karosserieseitigen Flansch 2 frei durchsetzt, ist eine kreisförmige Tragplatte 7 angeschraubt. Diese Tragplatte 7 trägt ober- und unterseitig mindesteins zwei nierenförmig ausgebildete halbschalenförmige Hohlkammern aus elastomerem Material, von denen in dem in Fig. 1 dargestellten Schnitt jeweils die obere Hohlkammer 10 und die untere Hohlkammer 13 zu erkennen sind. Die Innenräume 16 und 17 sind mit einer Flüssigkeit gefüllt und stehen über einen Überströmkanal 18 in der Tragplatte 7 miteinander in Verbindung.

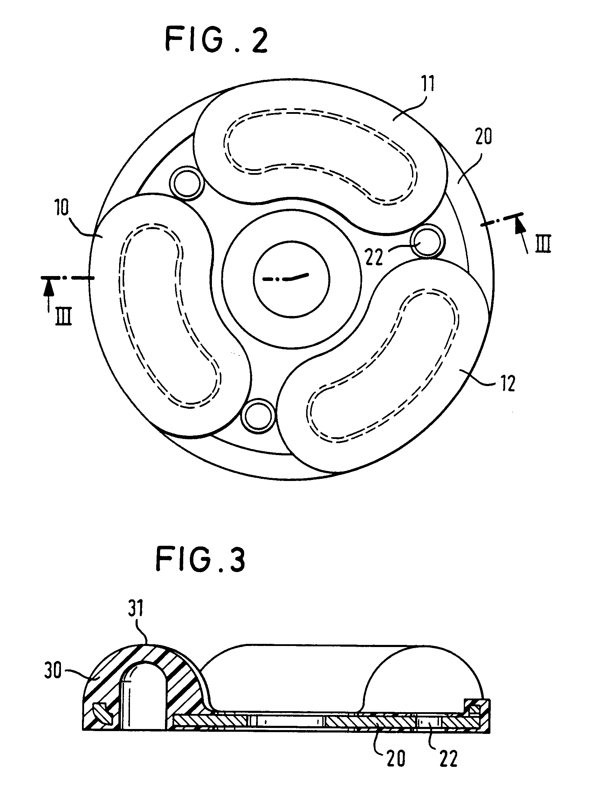

Beim dargestellten Ausführungsbeispiel sind - wie man insbesondere aus der Aufsicht aus Fig. 2 ersieht - jeweils 3 Hohlkammern 10, 11 und 12 auf einer Kreislinie auf der Tragplatte 7 angeordnet.

Zweckmäßigerweise sind die einzelnen Hohlkammern von Ober- und Unterseite zunächst auf eine gesonderte Ringplatte 20 bzw. 21 aufvulkanisiert, die dann beidseitig der Tragplatte 7 angeordnet und über Schrauben 22 in Umfangsrichtung zwischen den einzelnen Hohlkammern 10, 11 bzw. 12 gegeneinander verspannt sind.

Dieser eigentliche Zug- und Druckanschlag 5 ist dabei noch von einem topfförmigen Gehäuse 23 umschlossen, das auf der Unterseite des karosserieseitigen Flansches 2 angeschweißt ist. Damit bildet also die Unterseite 25 des karosserieseitigen Flansches 2 die Kontaktfläche für den Anschlag in Zugrichtung und der Boden 26 des topfförmigen Gehäuses 23 die Anschlagfläche in Druckrichtung.

Bei großen implizierten Schwingungen des am Flansch 1 festgelegten Antriebsaggregates kommt nunmehr eine der Kammern 10 bzw. 13 in Berührung mit einer der Anschlagflächen 25 oder 26, wodurch die jeweilige Kammer 10 bzw. 13 verformt und die Flüssigkeit durch den Überströmkanal 18 in die gegenüberliegende unbelastete Kammer verdrängt wird. Das verlustbehaftete Überströmen der Flüssigkeit führt zu einem Druckanstieg in der verformten Kammer und damit zu einer Versteifung des Anschlags. Mit zunehmender Deformationsgeschwindigkeit des Anschlages findet die Flüssigkeit immer weniger Zeit, sich durch die Überströmöffnungen auszutauschen, so daß die Steifigkeit des Anschlages bis zu einem Wert ansteigt, der dem Fall der vollständig geschlossenen Kammer entspricht.

Dagegen strebt die Anschlagsteifigkeit bei verschwindender Deformationsgeschwindigkeit gegen den im Vergleich niedrigen Wert der reinen Bauteilsteifigkeit, d.h. der Anschlag verhält sich, als wäre er nicht gefüllt.

Diesem Zustand entspricht in der praktischen Anwendung die Verformung des Anschlages durch längere Zeit anstehende Betriebslasten.

Die durch den Flüssigkeitsaustausch zwischen belasteter und unbelasteter Kammer 16 bzw. 17 bedingten Strömungsverluste entziehen dabei der Bewegung des Antriebsaggregats Energie und bedämpfen damit diese Bewegung.

Eine besonders günstige Ausgestaltung derartiger Hohlkammern ist im dem Längsschnitt nach Fig. 3 gezeigt. Die im Schnitt dargestellte Hohlkammer 30 weist einen in etwa halbkreisförmigen Querschnitt mit abnehmender Wandstärke zum Scheitelpunkt 31 bzw. kontinuierlich zunehmender Wandstärke zu den seitlichen Flanken hin auf. Auf diese Weise wird erreicht, daß die Volumennachgiebigkeit der Kammer 30 mit zunehmender Verformung beim Anliegen an einer Anschlagfläche abnimmt und damit die dynamische Steifigkeit ansteigt. Die gegenüberliegende, nicht näher dargestellte unbelastete Hohlkammer wird dagegen wegen der gleichartigen Geometrie volumenweicher und kann die verdrängte Flüssigkeit leichter aufnehmen. Damit trägt diese Gestaltung zur Erhöhung des für die hydraulische Dämpfung erforderlichen Druckgefälles bei.

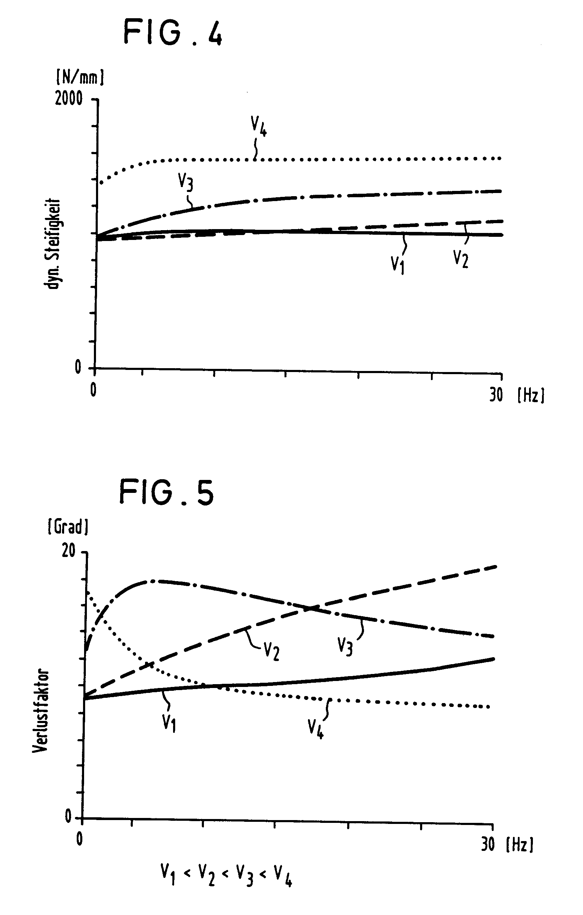

Wesentlich für den Verlauf der dynamischen Steifigkeit und der Dämpfung ist dabei die Viskosität der verwendeten Flüssigkeit in den Hohlkammern. In Fig. 4 ist dabei der Verlauf der dynamischen Steifigkeit und in Fig. 5 der Verlauf des Verlustfaktors bzw. der Dämpfung über einem Frequenzband von 0 - 30 Hz aufgetragen und zwar für jeweils 4 Flüssigkeiten unterschiedlicher Viskosität, wobei die jeweils ausgezogene Kurve für eine Flüssigkeit mit der niedrigsten Viskosität ν₁ = 1.000 mm²/s, die gepunktete Linie für eine Flüssigkeit mit der höchsten Viskosität ν₄ = 1.000.000 mm²/s gilt, und die beiden anderen Flüssigkeiten dazwischenliegende Viskositäten von ν₂ = 10.000 und ν₃ = 100.000 mm²/s aufweisen.

Man sieht dabei sehr deutlich, daß mit zunehmender Viskosität auch die dynamische Steifigkeit eines derartiges Lagers ansteigt, während ab einem bestimmten Viskositätswert, bis zu dem die Dämpfung mit zunehmender Frquenz ansteigt, diese Dämpfung bei höherer Viskosität wieder absinkt, da einem schnellen Flüssigkeitsaustausch über die Überströmöffnung dann erhebliche Grenzen gesetzt sind.

Mit der beschriebenen Ausgestaltung eines hydraulisch wirkenden Anschlages kann also ein deratiges Aggregatlager nicht nur hochfrequente Vibrationen optimal isolieren, sondern auch höheramplitudige Schwingungen, bei denen das Lager in den Anschlag geht, gezielt und ausreichend bedämpfen.

## Patentansprüche

1. Ringkernlager zur Abstützung von Antriebsaggregaten in Kraftfahrzeugen, mit einer zwischen einem motorseitigen und einem karosserieseitigen Flansch (1; 2) eingespannten hohlzylindrischen Tragfeder (4) aus elastomerem Material sowie einem Zug- und Druckanschlag (5), der einen am motorseitigen Flansch (1) festgelegten und die Tragfeder (4) und den karosserieseitigen Flansch (2) frei durchsetzenden Bolzen (6) aufweist, an dessem freien Ende (8) ein ringförmiger Anschlag (5) aus elastischem Material angeordnet ist, dadurch gekennzeichnet, daß auf Ober- und Unterseite einer am freien Bolzenkopf (8) festgelegten Tragplatte (7) mindestens je zwei angenähert nierenförmige, elastisch verformbare Hohlkammern (10; 13) aus elastomerem Material als Anschlagpolster einander gegenüberliegend festgelegt sind, die mit einer Flüssigkeit gefüllt sind und jeweils über einen, die Tragplatte (7) durchdringenden Überströmkanal (18) miteinander in Verbindung stehen.

2. Ringkernlager nach Anspruch 1, dadurch gekennzeichnet, daß als Zuganschlagfläche (25) die Unterseite des karossierseitigen Flansches (2) und als Druckanschlagfläche (26) der Boden (27) eines auf der Unterseite des karosserieseitigen Flansches (2) aufgesetzten, topfförmigen Gehäuses (23) vorgesehen ist.

3. Ringkernlager nach Anspruch 1 oder 2, dadurch gekennzeichnet, daß die Hohlkammern (10, 11, 12; 13) als nierenförmige Halbschalen ausgebildet sind, die mit ihrer offenen Seite auf der Tragplatte (7) befestigt sind.

4. Ringkernlager nach Anspruch 1 oder 3, dadurch gekennzeichnet, daß die nierenförmigen Hohlkammern (30) angenähert halbkreisförmigen Querschnitt mit abnehmender Wandstärke zum Scheitelpunkt (31) hin ausweisen.

5. Ringkernlager nach einen der Ansprüche 1 bis 4, dadurch gekennzeichnet, daß die auf einer Kreislinie hintereinanderliegenden Hohlkammern (10, 11, 12; 30) einer Seite auf einer gesonderten, ringscheibenförmigen Platte (20; 21) aufvulkanisiert sind, welche Platten (20; 21) durch die Tragplatte (7) hindurch und gegeneinander verspannt sind.

6. Ringkernlager nach einem oder mehreren der Ansprüche 1 bis 5, dadurch gekennzeichnet, daß jeweils drei Hohlkammern (10, 11, 12) auf einer Tragplattenseite angeordnet sind.

## Claims

1. Toroidal core mounting for supporting drive units in motor vehicles, having a hollow cylindrical suspension spring (4) made of elastomeric material, which is clamped between an engine-side flange (1) and a body-side flange (2), as well as having a tension and compression stop (5) with a bolt (6) which is fastened to the engine-side flange (1), freely penetrates the suspension spring (4) and the body-side flange (2) and on whose free end (8) an annular stop (5) made of elastic material is disposed, characterized in that at least two approximately kidney-shaped, elastically deformable hollow chambers (10; 13) made of elastomeric material are fastened opposite one another as stop pads to the top and underside of a supporting plate (7) fastened to the free bolt head (8), said hollow chambers each being filled with a liquid and communicating with one another via an overflow channel (18) which penetrates the supporting plate (7).

2. Toroidal core mounting according to claim 1, characterized in that the underside of the body-side flange (2) is provided as a tension stop face (25) and the base (27) of a pot-shaped housing (23) placed onto the underside of the body-side flange (2) serves as a compression stop face (26).

3. Toroidal core mounting according to claim 1 or 2, characterized in that the hollow chambers (10, 11, 12; 13) take the form of kidney-shaped half shells which are fastened by their open side to the supporting plate (7).

4. Toroidal core mounting according to claim 1 or 3, characterized in that the kidney-shaped hollow chambers (30) are approximately semicircular in cross-section with a decreasing wall thickness towards the apex (31).

5. Toroidal core mounting according to one of claims 1 to 4, characterized in that the hollow chambers (10, 11, 12; 30) of one side, which lie one behind the other along a circular line, are vulcanized on a separate ring-wheel-shaped plate (20; 21), said plates (20; 21) being braced through the supporting plate (7) and reciprocally.

6. Toroidal core mounting according to one or more of claims 1 to 5, characterized in that three hollow chambers (10, 11, 12) are disposed on each side of the supporting plate.

## Revendications

1. Support toroïdal servant à supporter des trains moteurs de véhicule automobile, comportant un ressort de suspension (4) cylindrique creux en un matériau élastomère encastré entre des brides (1;2) situées du côté du moteur et du côté de la carrosserie, ainsi qu'une butée de traction et de compression (5), qui possède un boulon (6) qui est fixé à la bride (1) située du côté du moteur et traverse librement le ressort de suspension (4) et la bride (2) située du côté de la carrosserie, et sur l'extrémité libre (8) duquel est montée une butée annulaire (5) en un matériau élastique, caractérisé par le fait que sur la face supérieure et sur la face inférieure d'une plaque de support (7) fixée à la tête libre (8) du boulon sont fixées, en tant que rembourrage de butée, en vis-à-vis l'une de l'autre, au moins respectivement deux chambres (10;13) déformables élastiquement, approximativement réniformes, en un matériau élastomère, qui sont emplies de liquide et qui communiquent entre elles par l'intermédiaire d'un canal de passage (18) qui traverse la plaque de support (7).

2. Support toroïdal suivant la revendication 1, caractérisé par le fait qu'il est prévu comme surface de butée de traction (25), la face inférieure de la bride (2) du côté de la carrosserie, et, comme surface de butée de compression (26), le fond (27) d'un boîtier (23) en forme de pot (23) monté sur la face inférieure de la bride (2) du côté de la carrosserie.

3. Support toroïdal suivant la revendication 1 ou 2, caractérisé par le fait que les chambres (10,11,12;13) ont la forme d'hemicoquilles réniformes, qui sont fixées par leur côté ouvert, sur la plaque de support (7).

4. Support toroïdal suivant la revendication 1 ou 3, caractérisé par le fait que les chambres (30) réniformes ont une section transversale approximativement semi-circulaire, l'épaisseur de leur paroi diminuant vers le sommet (31).

5. Support toroïdal suivant l'une des revendications 1 à 4, caractérisé par le fait que les chambres (10,11,12;30), qui sont situées les unes derrière les autres sur un cercle, sont fixées par vulcanisation par une face, sur une plaque distincte en forme de disque annulaire (20;21), lesquelles plaques (20;21) sont serrées. l'une contre l'autre et par la plaque de support (7).

6. Support toroïdal suivant une ou plusieurs des revendications 1 à 5, caractérisé par le fait que respectivement trois chambres (10,11,12) sont disposées sur une face de la plaque de support.
